# EUROPEAN PATENT SPECIFICATION

(11) **EP 3 522 127 B1**
(45) Date of publication and mention of the grant of the patent: **05.06.2024**
(21) Application number: 19155081.3
(22) Date of filing: 01.02.2019
(51) Int. Cl.: G08B 25/00

(54) **SYSTEMS AND METHODS FOR ARMING A SECURITY SYSTEM**
SYSTEME UND VERFAHREN ZUM AKTIVIEREN EINES SICHERHEITSSYSTEMS
SYSTÈMES ET PROCÉDÉS PERMETTANT D'ARMER UN SYSTÈME DE SÉCURITÉ

(30) Priority: 02.02.2018 US 201862625450 P; 31.01.2019 US 201916263179
(43) Date of publication of application: 07.08.2019
(60) Divisional application: 21169426.0
(73) Proprietor: Ademco Inc., Golden Valley, MN 55422 (US)
(72) Inventor: KRISHNAMOORTHY, Samidurai, Golden Valley, MN Minnesota (US); GANESAN, Balamurugan, Golden Valley, MN Minnesota (US); KUMAR, Praveen, Golden Valley, MN Minnesota (US)
(74) Representative: Murgitroyd & Company

(56) References cited:
- WO-A1-2016/109040
- US-A1- 2007 257 790
- US-A1- 2013 257 611
- US-A1- 2016 189 528
- US-A1- 2016 267 774
- US-B1- 9 646 482

## Description

### CROSS REFERENCE TO RELATED APPLICATIONS

Not applicable.

### FIELD

The present invention relates generally to security systems. More particularly, the present invention relates to systems and methods for arming a security system.

### BACKGROUND

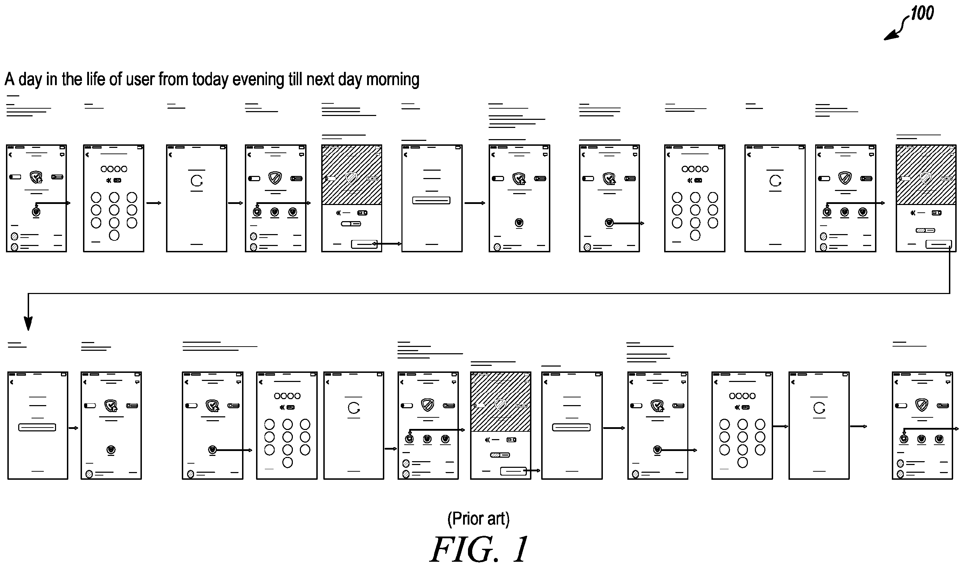

Known security systems include several disadvantages, some of which are described below and some of which are illustrated in FIG 1, which is a flow diagram of an arming method 100 known in the art.

First, to switch between two arming modes, known security systems must enter a disarm mode in between the two arming modes. U.S. Publication No. 2007/0257790 describes a known security system operating in an arm stay mode, detecting an opening of a perimeter or entry door, and switching to or staying in the arm stay mode without switching to the disarm mode. However, to switch from an arm away mode to the arm stay mode, the security system must switch from the arm away mode to the disarm mode before switching from the disarm mode to the arm stay mode. This
is a two-step process for one mode change. Furthermore, while in the disarm mode, a region monitored by the security system is vulnerable to threats, especially if a user disarms the security system and fails to enter or leave the region prior to arming the security system.

Second, when entering one of the two arming modes activates a home automation scene in the region, switching from the arm away mode to the disarm mode can activate the home automation scene and switching from the disarm mode to the arm stay mode can activate the home automation scene again, thereby creating annoyance to the user, including changes to lights, locks, thermostats, and other consumer products. Furthermore, such unnecessary activation of the home automation scene can create wear and tear on any appliances associated with the home automation scene.

Third, known security systems include a keypad permanently mounted on a wall. Accordingly, known security systems provide an entry or exit delay long enough for the user to enter or exit the region to access the keypad to arm or disarm the security system. However, such an entry or exit delay creates a window of time during which the region is vulnerable to the threats.

Notwithstanding the above-identified disadvantages of known security systems, Do It Yourself (DIY) security systems are becoming more prevalent in the marketplace and include mobile applications and/or wireless keyfobs as user interfaces for controlling the security systems without the keypad permanently mounted on the wall.

In view of the above, there is a need and an opportunity for improved systems and methods for arming a security system.

### BRIEF DESCRIPTION OF THE DRAWINGS

FIG 1 is a flow diagram of an arming method known in the art;
FIG. 2 is a block diagram of a system in accordance with disclosed embodiments;
FIG. 3 is a flow diagram of an arming method in accordance with disclosed embodiments;
FIG. 4 is a flow diagram of a method of switching between an arm away mode and an arm stay mode in a security system in accordance with disclosed embodiments; and
FIG. 5 is a flow diagram of a method of switching between an arm stay mode and an arm away mode in a security system in accordance with disclosed embodiments.

### DETAILED DESCRIPTION

The invention relates to a method and system as defined in claims 1 and 5. While this invention is susceptible of an embodiment in many different forms, specific embodiments thereof will be described herein in detail with the understanding that the present disclosure is to be considered as an exemplification of the principles of the invention. It is not intended to limit the invention to the specific illustrated embodiments.

Embodiments disclosed herein include systems and methods for arming a security system that can include directly transitioning the security system from a first arm mode to a second arm mode without switching to a disarm mode in between the first arm mode and the second arm mode. When the security system is in the first arm mode, a control device for the security system can receive user input requesting that the security system transition to the second arm mode, and responsive thereto, the security system can directly transition from the first arm mode to the second arm mode without switching to the disarm mode in between the first arm mode and the second arm mode.

According to the invention systems and methods disclosed herein include switching the security system directly from an arm away mode to an arm stay mode (an active mode), and according to a non claimed embodiment, switching the security system directly from the arm stay mode to an arm night mode (a sleep mode), switching the security system directly from the arm night mode to the arm stay mode, and/or switching the security system directly from the arm stay mode to the arm away mode in all without switching to the disarm mode in between any of these arming modes. Accordingly, systems and methods disclosed herein can switch between the arming modes in one step, thereby reducing unnecessary switching of and unnecessary wear and tear on appliances associated with home automation scenes associated with the arming modes.

In the embodiments, in which of the arming mode the security system is operating it can determine which of a plurality of sensors of the security system can trigger an alarm signal when respective alarm conditions monitored by each of the plurality of sensors are detected. For example, when the security system is operating in the first arm mode, each of a first set of the plurality of sensors can detect any of the respective alarm conditions associated therewith and, responsive thereto, the security system can activate the alarm signal. However, when the security system is operating in the second arm mode, each of a second set of the plurality of sensors can detect any of the respective alarm conditions associated therewith and, responsive thereto, the security system can activate the alarm signal.

According to the invention, the first set of the plurality of sensors is at least partially different from the second set of the plurality of sensors. For example, in some embodiments, in the arm away mode, all of the plurality of sensors can trigger the alarm signal when any of the plurality of sensors detects the respective alarm conditions associated therewith. However, in the arm stay mode, any of the plurality of sensors that can detect movement or other security related threats within an interior area of a region monitored by the security system can be deactivated while any of the plurality of sensors that can detect the respective alarm conditions associated therewith at or proximate to a perimeter of the region can be activated and trigger the alarm signal, thereby allowing a user of the security system to be present within the interior area of the region while having some alarm protection from security events that occur at or proximate to the perimeter of the region. In the arm night mode, any of the plurality of sensors that can detect movement or other security related threats within predetermined zones of the region, such as bedrooms, bathrooms, or a second floor of the region, can be deactivated while any of the plurality of sensors that can detect the respective alarm conditions associated therewith outside of the predetermined zones can be activated and trigger the alarm signal.

It is known that the security system can switch from the arm away mode to the disarm mode or from the disarm mode to the arm stay mode. Thereafter, the user may receive an emergency call or the like and forget to switch the security system to the arm away mode before leaving the region to attend to the emergency call. Under these circumstances and in accordance with disclosed embodiments, systems and methods disclosed herein can include automatically switch the security system from the disarm mode or the arm stay mode to the arm away mode responsive to a failure to detect an opening of or access to or from the region via an entry door within a predetermined period of time after switching to or entering the disarm mode or the arm stay mode. That is, in some embodiments, systems and methods disclosed herein can automatically switch the security system from the disarm mode or the arm stay mode to the arm away mode without receiving user input with explicit instructions to do so. In some embodiments, systems and methods disclosed herein can transmit an audio and/or visual push notification to the user to notify the user about the security system automatically switching to the arm away mode.

It is also known that the security system can provide an entry or exit delay during which the user can open and close the entry door any number of times. However, these circumstances may leave the region unsecured, for example, when the entry or exit delay is long and the user leaves the region quickly. Accordingly, in accordance with disclosed embodiments, during the entry or exit delay, systems and methods disclosed herein can automatically switch to a preselected mode, such as the arm away mode or the arm stay mode, responsive to detecting a closing of the entry door, thereby automatically terminating the entry or exit delay.

For example, according to not claimed embodiments, responsive to user input requesting that the security system transition from the arm stay mode or the disarm mode to the arm away mode, the security system activates an exit delay timer and supresses activation of the alarm signal responsive to any of the plurality of sensors detecting the respective alarm conditions associated therewith until expiration of the exit delay timer. Then, responsive to one of the plurality of sensors that monitors the entry door being triggered after activation of the exit delay timer and prior to the expiration of the exit delay timer, systems and methods disclosed herein transitions the security system directly to the arm away mode and terminates the exit delay timer. Additionally or alternatively, responsive to all of the plurality of sensors that monitor the entry door failing to be triggered after the activation of the exit delay timer and prior to the expiration of the exit delay timer, systems and methods disclosed herein can transition the security system directly to the arm stay mode or the disarm mode (or refrain from transitioning the security system out of the arm stay mode or the disarm mode) when the exit delay timer or the entry delay timer expires. Additionally or alternatively, responsive to all of the plurality of sensors that monitor the entry door failing to be triggered after the activation of the exit delay timer and prior to the expiration of the exit delay timer, systems and methods disclosed herein can transition the security system directly to the arm stay mode or the disarm mode (or refrain from transitioning the security system out of the arm stay mode or the disarm mode) when the exit delay timer expires and when any of the plurality of sensors detects a presence of the user within the interior area of the region.

According to the invention, responsive to user input requesting that the security system transitions from the arm away mode to the arm stay mode or the disarm mode, the security system can activate an entry delay timer and suppress the activation of the alarm signal responsive to any of the plurality of sensors detecting the respective alarm conditions associated therewith until the expiration of the entry delay timer. Then, responsive to the one of the plurality of sensors that monitors the entry door being triggered after activation of the entry delay timer and prior to the expiration of the entry delay timer, systems and methods disclosed herein transitions the security system directly to the arm stay mode or the disarm mode and terminates the entry delay timer. Additionally, responsive to all of the plurality of sensors that monitor the entry door failing to be triggered after the activation of the entry delay timer and prior to the expiration of the entry delay timer, systems and methods disclosed herein refrains from transitioning the security system out of the arm away mode when the entry delay timer expires. According to a non claimed option, responsive to all of the plurality of sensors that monitor the entry door failing to be triggered after the activation of the entry delay timer and prior to the expiration of the entry delay timer, systems and methods disclosed herein transitions the security system directly to the arm stay mode or the disarm mode when the entry delay timer expires and when any of the plurality of sensors detects the presence of the user within the interior area of the region.

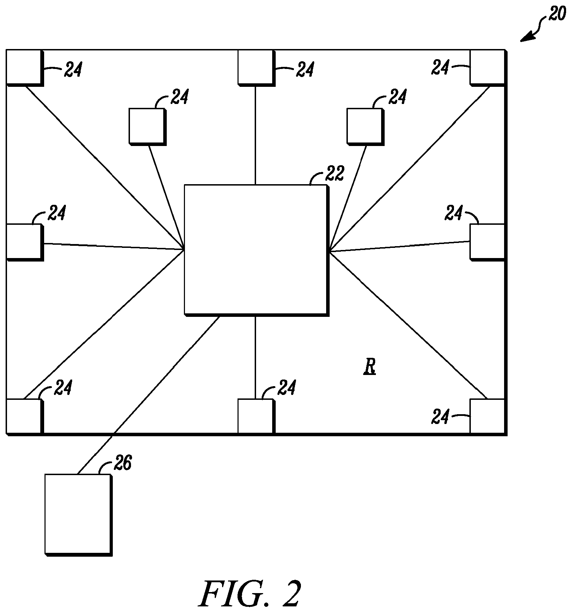

FIG. 2 is a block diagram of a security system 20 in accordance with disclosed embodiments. As seen in FIG. 2, the security system 20 can include a control panel 22, a plurality of sensors 24 deployed in a region R, and a control or user interface device 26. The control panel 22 can communicate with each of the plurality of sensors 24 and the control or user interface device 26 using wired or wireless mediums. In some embodiments, the control or user interface device 26 can be integrated into the control panel 22, and in some embodiments, the control or user interface device 26 can include a mobile device that can communicate with the control panel 22 via a wide area network, such as the internet.

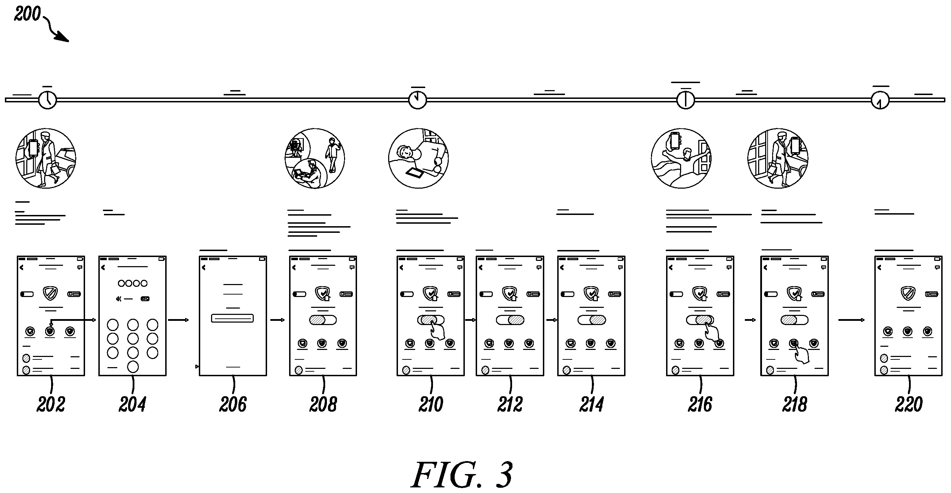

FIG. 3 is a flow diagram of an arming method 200 in accordance with disclosed embodiments. Relative to the arming method 100 of FIG. 1 known in the art, the arming method 200 requires less user interaction with and user input to a mobile application and fewer mode changes in the security system 20.

As seen in FIG. 3, the method 200 includes the control or user interface device 26 receiving user input with instructions to transition the security system 20 from an arm away mode to an arm stay mode, as in 202. Responsive thereto, the method 200 can include the control or user interface device 26 can soliciting a pin or a passcode from a user, as in 204, and when the pin or the passcode is valid, activating an entry delay timer, as in 206. After expiration of the entry delay timer, the method 200 can include the security system 20 transitioning directly to the arm stay mode, as in 208.

Furthermore, according to non claimed options, the method 200 can include the control or user interface device 26 receiving user input with instructions to transition the security system 20 from the arm stay mode to an arm night mode, as in 210. Responsive thereto and after expiration of a predetermined period of time, as in 212, the method 200 can include the security system transitioning directly to the arm night mode, as in 214.

Further still, according to non claimed options, the method 200 can include the control or user interface device 26 receiving user input with instructions to transition the security system 20 from the arm night mode to the arm stay mode, as in 216. Responsive thereto, the method 200 can include the security system 20 transitioning directly to the arm away mode and the control or user interface device 26 receiving user input with instructions to transition the security system 20 from the arm stay mode to the arm away mode, as in 218. Responsive thereto, the method 200 can include the security system 20 transitioning directly to the arm away mode, as in 220.

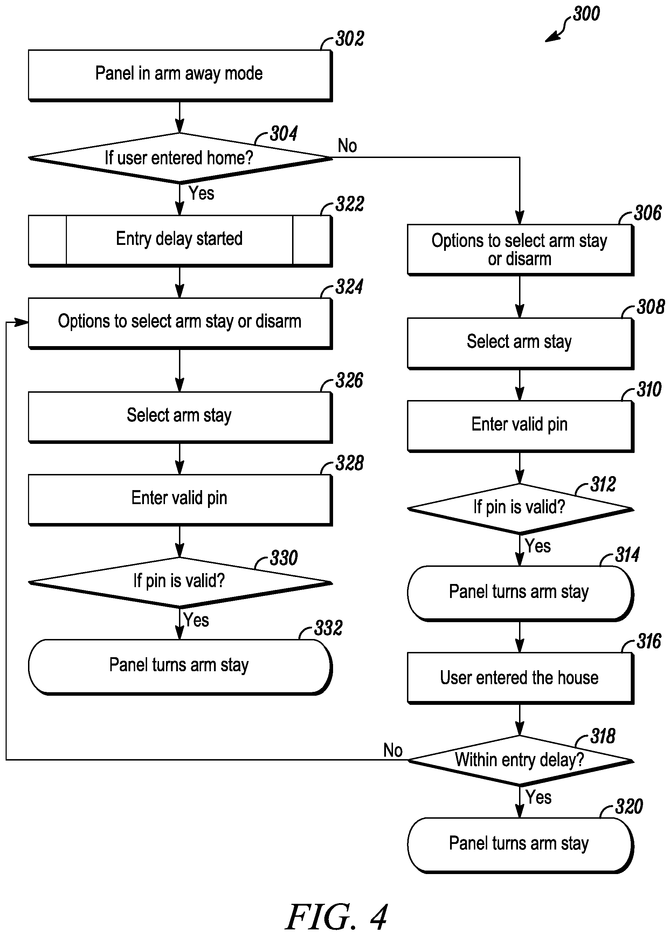

FIG. 4 is a flow diagram of a method 300 of switching between the arm away mode and the arm stay mode in the security system 20 in accordance with disclosed embodiments. As seen in FIG. 4 and as disclosed herein, the security system 20 can switch from the arm away mode to the arm stay mode without switching to the disarm mode in between the arm away mode and the arm stay mode.

For example, the method 300 includes the security system 20 operating in the arm away mode, as in 302. Then, the method 300 includes the security system 20 using the plurality of sensors 24 to determine whether the user has entered the region R, as in 304.

According to non claimed options, when the security system 20 determines that the user has not entered the region R, as in 304, the method 300 can include the control or user interface device 26 displaying options for the user to select the arm stay mode or the disarm mode, as in 306, the control or user interface device 26 receiving user input selecting the arm stay mode, as in 308, the control or user interface device 26 receiving the pin or the passcode, as in 310, and the security system 20 determining whether the pin or the passcode is valid, as in 312. However, in embodiments in which the control or user interface device 26 is the mobile device executing the mobile application thereon, the method 300 need not require the pin or the passcode.

When the security system 20 determines that the pin or the passcode is valid, as in 312, (or in embodiments that do not require the pin or the passcode, after receiving the user input selecting the arm stay mode, as in 308), the method 300 can include the security system 20 transitioning directly to the arm stay mode and starting an entry delay timer, as in 314. Then, the method 300 can include the security system 20 detecting the user inside of the region R, that is, entering the region, , as in 316, and determining whether the user entered the region R prior to expiration of the entry delay timer, as in 318.

When the security system determines that the user entered the region R prior to the expiration of the entry delay timer, as in 318, the method 300 can include the security system 20 maintaining operation in the arm stay mode, as in 320.

However, when the security system 20 determines that the user has not entered the region R prior to the expiration of the entry delay timer, as in 318, the method 300 can include the security system transitioning directly to the arm away mode and the control or user interface device 26 displaying the options for the user to select the arm stay mode or the disarm mode, as in 324.

When the security system 20 determines that the user has entered the region R, as in 304, the method 300 can include the security system 20 starting the entry delay timer, as in 322, the control or user interface device 26 displaying the options for the user to select the arm stay mode or the disarm mode, as in 324, the control or user interface device 26 receiving the user input selecting the arm stay mode, as in 326, the control or user interface device 26 receiving the pin or the passcode, as in 328, and the security system 20 determining whether the pin or the passcode is valid, as in 330.

When the security system 20 determines that the pin or the passcode is valid, as in 330, (or in embodiments that do not require the pin or the passcode, after receiving the user input selecting the arm stay mode, as in 326), the method 300 can include the security system 20 transitioning directly to the arm stay mode, as in 332.

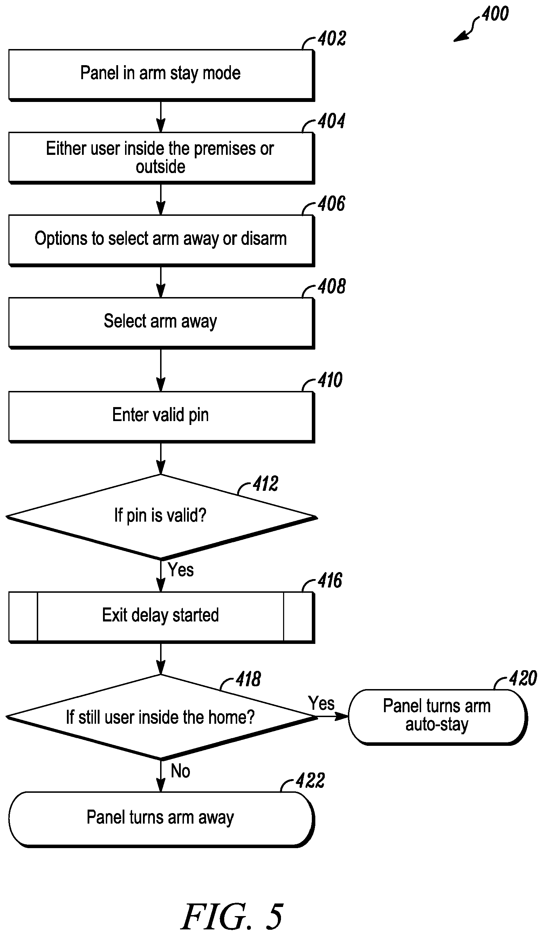

FIG. 5 is a flow diagram of a method 400 of switching between the arm stay mode and the arm away mode in the security system 20 in accordance with disclosed embodiments. As seen in FIG. 5 and as disclosed herein, the security system 20 can switch from the arm stay mode to the arm away mode without switching to the disarm mode in between the arm stay mode and the arm away mode.

For example, the method 400 can include the security system 20 operating in the arm stay mode, as in 402, with the user located either inside or outside of the region R, as in 404. Then, the method 400 can include the control or user interface device 26 displaying options for the user to select the arm away mode or the disarm mode, as in 406, the control or user interface device 26 receiving user input selecting the arm away mode, as in 408, the control or user interface device 26 receiving the pin or the passcode, as in 410, and the security system 20 determining whether the pin or the passcode received is valid as in 412. However, as with the method 300 of FIG. 4, in embodiments in which the control or user interface device 26 is the mobile device executing the mobile application thereon, the method 400 need not require the pin or the passcode.

When the method 400 determines that the pin or the passcode is valid, as in 412, (or in embodiments that do not require the pin or the passcode, after receiving the user input selecting the arm away mode, as in 408), the method 400 can include the security system 20 starting an exit delay timer, as in 416, and using the plurality of sensor 24 to determine whether the user is located inside of the region R, as in 418.

When the method 400 determines that the user is located inside of the region R, the method 400 can include the security system 20 maintaining operation in the arm stay mode or refraining from transitioning to the arm away mode, as in 420.

However, when the method 400 determines that the user is outside of the region R, that is, has exited the region R, the method 400 can include the security system transitioning directly to the arm away mode, as in 422.

Although a few embodiments have been described in detail above, other modifications are possible. For example, the logic flows described above do not require the particular order described or sequential order to achieve desirable results. Other embodiments may be within the scope of the invention.

From the foregoing, it will be observed that numerous variations and modifications may be effected without departing from the scope of the invention as set out in the appended claims. It is, of course, intended to cover all such modifications as fall within the scope of the invention.

## Claims

1. A method comprising:
a control device (26) of a security system (20) receiving a first user input while the security system is in a first arm mode, wherein the first user input requests that the security system (20) directly transition from the first arm mode to a second arm mode without switching to a disarm mode in between the first arm mode and the second arm mode; wherein the first arm mode alternatively is either an arm stay mode or an arm away mode whilst the second arm mode alternatively is either the arm away mode or the arm stay mode respectively and wherein the security system protects a monitored region with a plurality of sensors (24);
when the security system is operating in the arm stay mode, each of a first set of the plurality of sensors detecting any of respective alarm conditions associated therewith, and responsive thereto, the security system activating an alarm signal;
when the security system is operating in the arm away mode, each of a second set of the plurality of sensors detecting any of the respective alarm conditions associated therewith, and responsive thereto, the security system activating the alarm signal,
wherein the first set of the plurality of sensors is at least partially different from the second set of the plurality of sensors,
**characterized in that**:
wherein when the first arm mode is the arm away mode and the second arm mode is the arm stay mode:
responsive to the first user input requesting that the security system transition from the arm away mode to the arm stay mode, the security system activating an entry delay timer;
the security system suppressing activation of the alarm signal responsive to any of the plurality of sensors detecting the respective alarm conditions associated therewith until expiration of the entry delay timer;
responsive to one of the plurality of sensors that monitors an entrance to the monitored region being triggered after activation of the entry delay timer and prior to the expiration of the entry delay timer, the security system transitioning directly to the arm stay mode and terminating the entry delay timer; and
responsive to all of the plurality of sensors that monitor the entrance failing to be triggered after the activation of the entry delay timer and prior to the expiration of the entry delay timer, the security system refraining from transitioning out of the arm away mode when the entry delay timer expires.

2. The method of claim 1 wherein when the security system is operating in the arm stay mode, any of the plurality of sensors that can detect movement or other security related threats within an interior area of a region monitored by the security system is deactivated while any of the first set of plurality of sensors is capable of detecting the respective alarm conditions associated therewith at or proximate to a perimeter of the region.

3. The method of claim 1 wherein, when the first arm mode is the arm stay mode and the second arm mode is the arm away mode, the method further comprising:
responsive to the first user input requesting that the security system transition from the arm away mode to the arm stay mode, the security system activating an exit delay timer;
the security system suppressing activation of the alarm signal responsive to any of the plurality of sensors detecting the respective alarm conditions associated therewith until expiration of the exit delay timer;
responsive to one of the plurality of sensors that monitors an entrance to the monitored region being triggered after activation of the exit delay timer and prior to the expiration of the exit delay timer, the security system transitioning directly to the arm away mode and terminating the exit delay timer; and
responsive to all of the plurality of sensors that monitor the entrance failing to be triggered after the activation of the exit delay timer and prior to the expiration of the exit delay timer, the security system refraining from transitioning out of the arm stay mode when the exit delay timer expires and when any of the plurality of sensors detects a presence of a user inside of the monitored region.

4. The method of claim 1 wherein the first user input comprises the control device soliciting a pin or a passcode from a user.

5. A system comprising:
a control device (26) of a security system (20) that protects a monitored region; and
a plurality of sensors (24) of the security system, each of which monitors respective alarm conditions,
wherein the control device is configured to receive first user input while the security system is in a first arm mode, and wherein the first user input requests that the security system (20) directly transition from the first arm mode to a second arm mode without switching to a disarm mode in between the first arm mode and the second arm mode; wherein the first arm mode alternatively is either an arm stay mode or an arm away mode whilst the second arm mode alternatively is either the arm away mode or the arm stay mode respectively,
wherein, when the security system is operating in the arm stay mode, each of a first set of the plurality of sensors is configured to detect any of the respective alarm conditions associated therewith, and responsive thereto, the security system is configured to activate an alarm signal,
wherein, when the security system is operating in the arm away mode, each of a second set of the plurality of sensors is configured to detect any of the respective alarm conditions associated therewith, and responsive thereto, the security system is configured to activate the alarm signal,
wherein the first set of the plurality of sensors is at least partially different from the second set of the plurality of sensors, and
**characterized in that**:
wherein when the first arm mode is the arm away mode and the second arm mode is the arm stay mode, and responsive to the first user input requesting that the security system transition from the arm away mode to the arm stay mode, the security system is configured to activate an entry delay timer and suppress activation of the alarm signal responsive to any of the plurality of sensors detecting the respective alarm conditions associated therewith until expiration of the entry delay timer, wherein, responsive to one of the plurality of sensors that monitors an entrance to the monitored region being triggered after activation of the entry delay timer and prior to the expiration of the entry delay timer, the security system is configured to transition directly to the arm stay mode and terminate the entry delay timer, and wherein, responsive to all of the plurality of sensors that monitor the entrance failing to be triggered after the activation of the entry delay timer and prior to the expiration of the entry delay timer, the security system is configured to refrain from transition out of the arm away mode when the entry delay timer expires.

6. The system of claim 5 wherein, when the security system is operating in the arm stay mode, any of the plurality of sensors that can detect movement or other security related threats within an interior area of a region monitored by the security system is deactivated while any of the first set of plurality of sensors is configured to being capable of detecting the respective alarm conditions associated therewith at or proximate to a perimeter of the region.

7. The system of claim 5 wherein when the first arm mode is the arm stay mode and the second arm mode is the arm away mode, responsive to the first user input requesting that the security system transition from the arm away mode to the arm stay mode, the security system is configured to activate an exit delay timer and suppress activation of the alarm signal responsive to any of the plurality of sensors detecting the respective alarm conditions associated therewith until expiration of the exit delay timer, wherein, responsive to one of the plurality of sensors that monitors an entrance to the monitored region being triggered after activation of the exit delay timer and prior to the expiration of the exit delay timer, the security system is configured to transition directly to the arm away mode and terminate the exit delay timer, and wherein, responsive to all of the plurality of sensors that monitor the entrance failing to be triggered after the activation of the exit delay timer and prior to the expiration of the exit delay timer, the security system is configured to refrain from transition out of the arm stay mode when the exit delay timer expires and when any of the plurality of sensors detects a presence of a user inside of the monitored region.

## Patentansprüche

1. Ein Verfahren, das Folgendes beinhaltet:
eine Steuervorrichtung (26) eines Sicherheitssystems (20), die eine erste Benutzereingabe empfängt, während sich das Sicherheitssystem in einem ersten aktiven Modus befindet, wobei die erste Benutzereingabe anfragt, dass das Sicherheitssystem (20) direkt von dem ersten aktiven Modus in einen zweiten aktiven Modus übergeht, ohne zwischen dem ersten aktiven Modus und dem zweiten aktiven Modus auf einen inaktiven Modus umzuschalten; wobei der erste aktive Modus alternativ entweder ein Aktiv-in-Anwesenheit-Modus oder ein Aktiv-in-Abwesenheit-Modus ist bzw. der zweite aktive Modus alternativ entweder der Aktiv-in-Abwesenheit-Modus oder der Aktiv-in-Anwesenheit-Modus ist und wobei das Sicherheitssystem eine überwachte Region mit einer Vielzahl von Sensoren (24) schützt;
wenn das Sicherheitssystem in dem Aktiv-in-Anwesenheit-Modus arbeitet, erkennt jeder eines ersten Satzes der Vielzahl von Sensoren eine jeweilige Alarmbedingung, die damit assoziiert ist, und als Antwort darauf aktiviert das Sicherheitssystem ein Alarmsignal;
wenn das Sicherheitssystem in dem Aktiv-in-Abwesenheit-Modus arbeitet, erkennt jeder eines zweiten Satzes der Vielzahl von Sensoren eine jeweilige Alarmbedingung, die damit assoziiert ist, und als Antwort darauf aktiviert das Sicherheitssystem das Alarmsignal,
wobei sich der erste Satz der Vielzahl von Sensoren mindestens teilweise von dem zweiten Satz der Vielzahl von Sensoren unterscheidet,
**dadurch gekennzeichnet, dass**:
wobei, wenn der erste aktive Modus der Aktiv-in-Abwesenheit-Modus ist und der zweite aktive Modus der Aktiv-in-Anwesenheit-Modus ist:
als Antwort darauf, dass die erste Benutzereingabe anfragt, dass das Sicherheitssystem von dem Aktiv-in-Abwesenheit-Modus in den Aktiv-in-Anwesenheit-Modus übergeht, das Sicherheitssystem einen Ankunftverzögerungszeitgeber aktiviert;
das Sicherheitssystem die Aktivierung des Alarmsignals als Antwort darauf, dass einer der Vielzahl von Sensoren die jeweilige Alarmbedingung erkennt, die damit assoziiert ist, bis zum Ablauf des Ankunftverzögerungszeitgebers unterdrückt;
als Antwort darauf, dass einer der Vielzahl von Sensoren, der einen Zugang zu der überwachten Region überwacht, nach der Aktivierung des Ankunftverzögerungszeitgebers und vor dem Ablauf des Ankunftverzögerungszeitgebers ausgelöst wird, das Sicherheitssystem direkt in den Aktiv-in-Anwesenheit-Modus übergeht und den Ankunftverzögerungszeitgeber beendet; und
als Antwort darauf, dass alle der Vielzahl von Sensoren, die den Zugang überwachen, nach der Aktivierung des Ankunftverzögerungszeitgebers und vor dem Ablauf des Ankunftverzögerungszeitgebers nicht ausgelöst werden, das Sicherheitssystem den Übergang aus dem Aktiv-in-Abwesenheit-Modus unterlässt, wenn der Ankunftverzögerungszeitgeber abläuft.

2. Verfahren gemäß Anspruch 1, wobei, wenn das Sicherheitssystem in dem Aktiv-in-Anwesenheit-Modus arbeitet, einer der Vielzahl von Sensoren, die Bewegung oder andere sicherheitsbezogene Bedrohungen innerhalb eines Innenbereichs einer Region, die von dem Sicherheitssystem überwacht wird, erkennen können, deaktiviert wird, während einer des ersten Satzes der Vielzahl von Sensoren fähig ist, die jeweiligen Alarmbedingungen, die damit assoziiert sind, bei oder in der Nähe eines Rands der Region zu erkennen.

3. Verfahren gemäß Anspruch 1, wobei, wenn der erste aktive Modus der Aktiv-in-Anwesenheit-Modus ist und der zweite aktive Modus der Aktiv-in-Abwesenheit-Modus ist, das Verfahren ferner Folgendes beinhaltet:
als Antwort darauf, dass die erste Benutzereingabe anfragt, dass das Sicherheitssystem von dem Aktiv-in-Abwesenheit-Modus in den Aktiv-in-Anwesenheit-Modus übergeht, das Sicherheitssystem einen Abreiseverzögerungszeitgeber aktiviert;
das Sicherheitssystem die Aktivierung des Alarmsignals als Antwort darauf, dass einer der Vielzahl von Sensoren die jeweilige Alarmbedingung erkennt, die damit assoziiert ist, bis zum Ablauf des Abreiseverzögerungszeitgebers unterdrückt;
als Antwort darauf, dass einer der Vielzahl von Sensoren, der einen Zugang zu der überwachten Region überwacht, nach der Aktivierung des Abreiseverzögerungszeitgebers und vor dem Ablauf des Abreiseverzögerungszeitgebers ausgelöst wird, das Sicherheitssystem direkt in den Aktiv-in-Abwesenheit-Modus übergeht und den Abreiseverzögerungszeitgeber beendet; und
als Antwort darauf, dass alle der Vielzahl von Sensoren, die den Zugang überwachen, nach der Aktivierung des Abreiseverzögerungszeitgebers und vor dem Ablauf des Abreiseverzögerungszeitgebers nicht ausgelöst werden, das Sicherheitssystem den Übergang aus dem Aktiv-in-Anwesenheit-Modus unterlässt, wenn der Abreiseverzögerungszeitgeber abläuft und wenn einer der Vielzahl von Sensoren eine Gegenwart eines Benutzers innerhalb der überwachten Region erkennt.

4. Verfahren gemäß Anspruch 1, wobei die erste Benutzereingabe beinhaltet, dass die Steuervorrichtung eine Pin oder einen Passcode von einem Benutzer abfragt.

5. Ein System, das Folgendes beinhaltet:
eine Steuervorrichtung (26) eines Sicherheitssystems (20), die eine überwachte Region schützt; und
eine Vielzahl von Sensoren (24) des Sicherheitssystems, von denen jeder jeweilige Alarmbedingungen überwacht,
wobei die Steuervorrichtung konfiguriert ist, um eine erste Benutzereingabe zu empfangen, während sich das Sicherheitssystem in einem ersten aktiven Modus befindet, und wobei die erste Benutzereingabe anfragt, dass das Sicherheitssystem (20) direkt von dem ersten aktiven Modus in einen zweiten aktiven Modus übergeht, ohne zwischen dem ersten aktiven Modus und dem zweiten aktiven Modus auf einen inaktiven Modus umzuschalten; wobei der erste aktive Modus alternativ entweder ein Aktiv-in-Anwesenheit-Modus oder ein Aktiv-in-Abwesenheit-Modus ist bzw. der zweite aktive Modus alternativ entweder der Aktiv-in-Abwesenheit-Modus oder der Aktiv-in-Anwesenheit-Modus ist,
wobei, wenn das Sicherheitssystem in dem Aktiv-in-Anwesenheit-Modus arbeitet, jeder eines ersten Satzes der Vielzahl von Sensoren konfiguriert ist, um eine jeweilige Alarmbedingung zu erkennen, die damit assoziiert ist, und als Antwort darauf das Sicherheitssystem konfiguriert ist, um ein Alarmsignal zu aktivieren, wobei, wenn das Sicherheitssystem in dem Aktiv-in-Abwesenheit-Modus arbeitet, jeder eines zweiten Satzes der Vielzahl von Sensoren konfiguriert ist, um eine jeweilige Alarmbedingung zu erkennen, die damit assoziiert ist, und als Antwort darauf das Sicherheitssystem konfiguriert ist, um das Alarmsignal zu aktivieren,
wobei sich der erste Satz der Vielzahl von Sensoren mindestens teilweise von dem zweiten Satz der Vielzahl von Sensoren unterscheidet, und
**dadurch gekennzeichnet, dass**:
wobei, wenn der erste aktive Modus der Aktiv-in-Abwesenheit-Modus ist und der zweite aktive Modus der Aktiv-in-Anwesenheit-Modus ist und als Antwort darauf, dass die erste Benutzereingabe anfragt, dass das Sicherheitssystem von dem Aktiv-in-Abwesenheit-Modus in den Aktiv-in-Anwesenheit-Modus übergeht, das Sicherheitssystem konfiguriert ist, um einen Ankunftverzögerungszeitgeber zu aktivieren und die Aktivierung des Alarmsignals als Antwort darauf, dass einer der Vielzahl von Sensoren die jeweiligen Alarmbedingungen erkennt, die damit assoziiert sind, bis zum Ablauf des Ankunftverzögerungszeitgebers zu unterdrücken, wobei als Antwort darauf, dass einer der Vielzahl von Sensoren, der einen Zugang zu der überwachten Region überwacht, nach der Aktivierung des Ankunftverzögerungszeitgebers und vor dem Ablauf des Ankunftverzögerungszeitgebers ausgelöst wird, das Sicherheitssystem konfiguriert ist, um direkt in den Aktiv-in-Anwesenheit-Modus überzugehen und den Ankunftverzögerungszeitgeber zu beenden, und wobei als Antwort darauf, dass alle der Vielzahl von Sensoren, die den Zugang überwachen, nach der Aktivierung des Ankunftverzögerungszeitgebers und vor dem Ablauf des Ankunftverzögerungszeitgebers nicht ausgelöst werden, das Sicherheitssystem konfiguriert ist, um den Übergang aus dem Aktiv-in-Abwesenheit-Modus zu unterlassen, wenn der Ankunftverzögerungszeitgeber abläuft.

6. System gemäß Anspruch 5, wobei, wenn das Sicherheitssystem in dem Aktiv-in-Anwesenheit-Modus arbeitet, einer der Vielzahl von Sensoren, die Bewegung oder andere sicherheitsbezogene Bedrohungen innerhalb eines Innenbereichs einer Region, die von dem Sicherheitssystem überwacht wird, erkennen können, deaktiviert wird, während einer des ersten Satzes der Vielzahl von Sensoren konfiguriert ist, um fähig zu sein, die jeweiligen Alarmbedingungen, die damit assoziiert sind, bei oder in der Nähe eines Rands der Region zu erkennen.

7. System gemäß Anspruch 5, wobei, wenn der erste aktive Modus der Aktiv-in-Anwesenheit-Modus ist und der zweite aktive Modus der Aktiv-in-Abwesenheit-Modus ist, als Antwort darauf, dass die erste Benutzereingabe anfragt, dass das Sicherheitssystem von dem Aktiv-in-Abwesenheit-Modus in den Aktiv-in-Anwesenheit-Modus übergeht, das Sicherheitssystems konfiguriert ist, um einen Abreiseverzögerungszeitgeber zu aktivieren und die Aktivierung des Alarmsignals als Antwort darauf, dass einer der Vielzahl von Sensoren die jeweiligen Alarmbedingungen erkennt, die damit assoziiert sind, bis zum Ablauf des Abreiseverzögerungszeitgebers zu unterdrücken, wobei als Antwort darauf, dass einer der Vielzahl von Sensoren, der einen Zugang zu der überwachten Region überwacht, nach der Aktivierung des Abreiseverzögerungszeitgebers und vor dem Ablauf des Abreiseverzögerungszeitgebers ausgelöst wird, das Sicherheitssystem konfiguriert ist, um direkt in den Aktiv-in-Abwesenheit-Modus überzugehen und den Abreiseverzögerungszeitgeber zu beenden, und wobei als Antwort darauf, dass alle der Vielzahl von Sensoren, die den Zugang überwachen, nach der Aktivierung des Abreiseverzögerungszeitgebers und vor dem Ablauf des Abreiseverzögerungszeitgebers nicht ausgelöst werden, das Sicherheitssystem konfiguriert ist, um den Übergang aus dem Aktiv-in-Anwesenheit-Modus zu unterlassen, wenn der Abreiseverzögerungszeitgeber abläuft und wenn einer der Vielzahl von Sensoren eine Gegenwart eines Benutzers innerhalb der überwachten Region erkennt.

## Revendications

1. Un procédé comprenant :
le fait pour un dispositif de commande (26) d'un système de sécurité (20) de recevoir une première saisie utilisateur tandis que le système de sécurité est dans un premier mode armement, la première saisie utilisateur demandant que le système de sécurité (20) effectue une transition directement du premier mode armement à un deuxième mode armement sans basculer vers un mode désarmement entre le premier mode armement et le deuxième mode armement ; le premier mode armement étant alternativement soit un mode armement sans occupant soit un mode armement avec occupant alors que le deuxième mode armement est alternativement soit le mode armement sans occupant soit le mode armement avec occupant respectivement, et le système de sécurité protégeant une région surveillée avec une pluralité de capteurs (24) ;
lorsque le système de sécurité fonctionne dans le mode armement avec occupant, le fait pour chaque capteur d'un premier ensemble de la pluralité de capteurs de détecter n'importe quelle condition parmi des conditions d'alarme respectives qui lui sont associées, et en réponse à cela, le fait pour le système de sécurité d'activer un signal d'alarme ;
lorsque le système de sécurité fonctionne dans le mode armement sans occupant, le fait pour chaque capteur d'un deuxième ensemble de la pluralité de capteurs de détecter n'importe quelle condition parmi les conditions d'alarme respectives qui lui sont associées, et en réponse à cela, le fait pour le système de sécurité d'activer le signal d'alarme,
dans lequel le premier ensemble de la pluralité de capteurs est au moins partiellement différent du deuxième ensemble de la pluralité de capteurs,
**caractérisé en ce que** :
lorsque le premier mode armement est le mode armement sans occupant et le deuxième mode armement est le mode armement avec occupant :
en réponse au fait que la première saisie utilisateur demande que le système de sécurité effectue une transition du mode armement sans occupant au mode armement avec occupant, le système de sécurité active un temporisateur de délai d'entrée ;
le système de sécurité supprime une activation du signal d'alarme en réponse au fait que n'importe quel capteur de la pluralité de capteurs détecte les conditions d'alarme respectives qui lui sont associées jusqu'à expiration du temporisateur de délai d'entrée ;
en réponse au fait qu'un capteur de la pluralité de capteurs qui surveille un accès à la région surveillée est déclenché après activation du temporisateur de délai d'entrée et avant l'expiration du temporisateur de délai d'entrée, le système de sécurité effectue une transition directement vers le mode armement avec occupant et met fin au temporisateur de délai d'entrée ; et
en réponse au fait qu'aucun capteur de la pluralité de capteurs qui surveille l'accès n'est déclenché après l'activation du temporisateur de délai d'entrée et
avant l'expiration du temporisateur de délai d'entrée, le système de sécurité n'effectue pas de transition depuis le mode armement sans occupant lorsque le temporisateur de délai d'entrée expire.

2. Le procédé de la revendication 1 dans lequel lorsque le système de sécurité fonctionne dans le mode armement avec occupant, n'importe quel capteur de la pluralité de capteurs qui peut détecter un mouvement ou d'autres menaces relatives à la sécurité au sein d'une zone intérieure d'une région surveillée par le système de sécurité est désactivé tandis que n'importe quel capteur du premier ensemble de la pluralité de capteurs est en mesure de détecter les conditions d'alarme respectives qui lui sont associées au niveau ou à proximité d'un périmètre de la région.

3. Le procédé de la revendication 1 dans lequel, lorsque le premier mode armement est le mode armement avec occupant et le deuxième mode armement est le mode armement sans occupant, le procédé comprend en outre :
en réponse au fait que la première saisie utilisateur demande que le système de sécurité effectue une transition du mode armement sans occupant au mode armement avec occupant, le fait pour le système de sécurité d'activer un temporisateur de délai de sortie ;
le fait pour le système de sécurité de supprimer l'activation du signal d'alarme en réponse au fait que n'importe quel capteur de la pluralité de capteurs détecte les conditions d'alarme respectives qui lui sont associées jusqu'à expiration du temporisateur de délai de sortie ;
en réponse au fait qu'un capteur de la pluralité de capteurs qui surveille un accès à la région surveillée est déclenché après activation du temporisateur de délai de sortie et avant l'expiration du temporisateur de délai de sortie, le fait pour le système de sécurité d'effectuer une transition directement vers le mode armement sans occupant et de mettre fin au temporisateur de délai de sortie ; et
en réponse au fait qu'aucun capteur de la pluralité de capteurs qui surveille l'accès n'est déclenché après l'activation du temporisateur de délai de sortie et avant l'expiration du temporisateur de délai de sortie, le fait pour le système de sécurité de ne pas effectuer de transition depuis le mode armement avec occupant lorsque le temporisateur de délai de sortie expire et lorsque n'importe quel capteur de la pluralité de capteurs détecte une présence d'un utilisateur au dedans de la région surveillée.

4. Le procédé de la revendication 1 dans lequel la première saisie utilisateur comprend le fait que le dispositif de commande sollicite un numéro d'identification personnelle (PIN) ou un code de passe d'un utilisateur.

5. Un système comprenant :
un dispositif de commande (26) d'un système de sécurité (20) qui protège une région surveillée ; et
une pluralité de capteurs (24) du système de sécurité, dont chacun surveille des conditions d'alarme respectives,
dans lequel le dispositif de commande est configuré pour recevoir une première saisie utilisateur tandis que le système de sécurité est dans un premier mode armement, et dans lequel la première saisie utilisateur demande que le système de sécurité (20) effectue une transition directement du premier mode armement à un deuxième mode armement sans basculer vers un mode désarmement entre le premier mode armement et le deuxième mode armement ; le premier mode armement étant alternativement soit un mode armement avec occupant soit un mode armement sans occupant alors que le deuxième mode armement est alternativement soit le mode armement sans occupant soit le mode armement avec occupant respectivement,
dans lequel, lorsque le système de sécurité fonctionne dans le mode armement avec occupant, chaque capteur d'un premier ensemble de la pluralité de capteurs est configuré pour détecter n'importe quelle condition parmi les conditions d'alarme respectives qui lui sont associées, et en réponse à cela, le système de sécurité est configuré pour activer un signal d'alarme,
dans lequel, lorsque le système de sécurité fonctionne dans le mode armement sans occupant, chaque capteur d'un deuxième ensemble de la pluralité de capteurs est configuré pour détecter n'importe quelle condition parmi les conditions d'alarme respectives qui lui sont associées, et en réponse à cela, le système de sécurité est configuré pour activer le signal d'alarme,
dans lequel le premier ensemble de la pluralité de capteurs est au moins partiellement différent du deuxième ensemble de la pluralité de capteurs, et
**caractérisé en ce que** :
dans lequel lorsque le premier mode armement est le mode armement sans occupant et le deuxième mode armement est le mode armement avec occupant, et en réponse au fait que la première saisie utilisateur demande que le système de sécurité effectue une transition du mode armement sans occupant au mode armement avec occupant, et en réponse au fait que la première saisie utilisateur demande que le système de sécurité effectue une transition du mode armement sans occupant au mode armement avec occupant, le système de sécurité est configuré pour activer un temporisateur de délai d'entrée et supprimer une activation du signal d'alarme en réponse au fait que n'importe quel capteur de la pluralité de capteurs détecte les conditions d'alarme respectives qui lui sont associées jusqu'à expiration du temporisateur de délai d'entrée, dans lequel, en réponse au fait qu'un capteur de la pluralité de capteurs qui surveille un accès à la région surveillée est déclenché après activation du temporisateur de délai d'entrée et avant l'expiration du temporisateur de délai d'entrée, le système de sécurité est configuré pour effectuer une transition directement vers le mode armement avec occupant et mettre fin au temporisateur de délai d'entrée, et dans lequel, en réponse au fait qu'aucun capteur de la pluralité de capteurs qui surveille l'accès n'est déclenché après l'activation du temporisateur de délai d'entrée et avant l'expiration du temporisateur de délai d'entrée, le système de sécurité est configuré pour ne pas effectuer de transition depuis le mode armement sans occupant lorsque le temporisateur de délai d'entrée expire.

6. Le système de la revendication 5 dans lequel, lorsque le système de sécurité fonctionne dans le mode armement avec occupant, n'importe quel capteur de la pluralité de capteurs qui peut détecter un mouvement ou d'autres menaces relatives à la sécurité au sein d'une zone intérieure d'une région surveillée par le système de sécurité est désactivé tandis que n'importe quel capteur du premier ensemble d'une pluralité de capteurs est configuré pour être en mesure de détecter les conditions d'alarme respectives qui lui sont associées au niveau ou à proximité d'un périmètre de la région.

7. Le système de la revendication 5 dans lequel, lorsque le premier mode armement est le mode armement avec occupant et le deuxième mode armement est le mode armement sans occupant, en réponse au fait que la première saisie utilisateur demande que le système de sécurité effectue une transition du mode armement sans occupant au mode armement avec occupant, le système de sécurité est configuré pour activer un temporisateur de délai de sortie et supprimer une activation du signal d'alarme en réponse au fait que n'importe quel capteur de la pluralité de capteurs détecte les conditions d'alarme respectives qui lui sont associées jusqu'à expiration du temporisateur de délai de sortie, dans lequel, en réponse au fait qu'un capteur de la pluralité de capteurs qui surveille un accès à la région surveillée est déclenché après activation du temporisateur de délai de sortie et avant l'expiration du temporisateur de délai de sortie, le système de sécurité est configuré pour effectuer une transition directement vers le mode armement sans occupant et mettre fin au temporisateur de délai de sortie, et dans lequel, en réponse au fait qu'aucun capteur de la pluralité de capteurs qui surveille l'accès n'est déclenché après l'activation du temporisateur de délai de sortie et avant l'expiration du temporisateur de délai de sortie, le système de sécurité est configuré pour ne pas effectuer de transition depuis le mode armement avec occupant lorsque le temporisateur de délai de sortie expire et lorsque n'importe quel capteur de la pluralité de capteurs détecte une présence d'un utilisateur au dedans de la région surveillée.
